# EUROPÄISCHE PATENTANMELDUNG

(11) **EP 1 630 916 A1**
(43) Veröffentlichungstag der Anmeldung: **01.03.2006**
(21) Anmeldenummer: 04020469.5
(22) Anmeldetag: 27.08.2004
(51) Int. Cl.: H02B 1/20, H01H 9/34, H01H 71/08

(54) **Einspeisesystem für Niederspannungsschaltgeräte**

(71) Anmelder: SIEMENS AKTIENGESELLSCHAFT, 80333 München (DE)
(72) Erfinder: Adunka, Robert, Dr., 92237 Sulzbach-Rosenberg (DE); Bollinger, Georg, 92431 Neunburg v. Wald (DE); Brandl, Hans, 93142 Maxhütte-Haidhof (DE); Heldmann, Berthold, 92272 Freudenberg (DE)

(57) **Zusammenfassung**

Die Erfindung betrifft ein Einspeisesystem für Niederspannungsschaltergeräte mit
- einer Montagevorrichtung (5) zur Montage mindestens eines elektromechanischen Schaltgerätes (2) in einer Montageebene (14), wobei das Schaltgerät (2) Gehäuseöffnungen (3) an mindestens einer ersten Seite (13) des Schaltgerätes (2) aufweist, und
- mindestens einer derart angeordneten Stromschiene (1), dass sich in orthogonaler Richtung zur Montageebene (14) die Gehäuseöffnungen (3) des montierten Schaltgerätes (2) im Wesentlichen zwischen der Stromschiene (1) und der Montageebene (14) befinden.

Um ein kompaktes und sicheres Einspeisesystem zur Verfügung zu stellen, wird vorgeschlagen, dass erste Mittel (10,11a,11b,12) zur Freihaltung der Gehäuseöffnungen (3) zwischen der Stromschiene (1) und der Montageebene (14) angeordnet sind.

## Beschreibung

Die Erfindung betrifft ein Einspeisesystem für Niederspannungsschaltgeräte.

Ein derartiges System kommt beispielsweise in Schaltschränken zum Einsatz, um über elektromechanische und elektronische Schaltgeräte industrielle Verbraucher aus einem Versorgungsnetz zu speisen.

Bekannte Einspeisesysteme weisen ein an das Versorgungsnetz angeschlossenes Sammelschienensystem, mit dem die Schaltgeräte eingangsseitig verbunden sind, und eine Montagevorrichtung auf, die als Halterung für die Schaltgeräte dient. In Abhängigkeit des oder der ausgangsseitig angeschlossenen Verbraucher werden beispielsweise Leistungsschalter zur Kurzschlussabschaltung, Sanftstarter für Motoren, Schütze zum Zu- und Abschalten von Motoren, Kompaktabzweige oder Überlastrelais auf der Montagefläche montiert. Darüber hinaus umfasst ein derartiges Einspeisesystem u. U. auch sicherungslose Verbraucherabzweige.

Wenn zum Abschalten eines Kurzschlusses die Kontakte eines Leistungsschalters geöffnet werden, zündet zunächst ein Lichtbogen. Um die hierbei entstehenden heißen, ionisierten Gase, das so genannte Plasma, aus dem Gehäuse abzuführen, besitzt der Leistungsschalter Ausblasöffnungen. Um einen ungehinderten Austritt des Plasmas zu gewährleisten, muss sichergestellt sein, dass die Ausblasöffnungen stets frei liegen. Daher muss bei einer Montage der Leistungsschalter beachtet werden, dass die Ausblasöffnungen nicht verbaut werden.

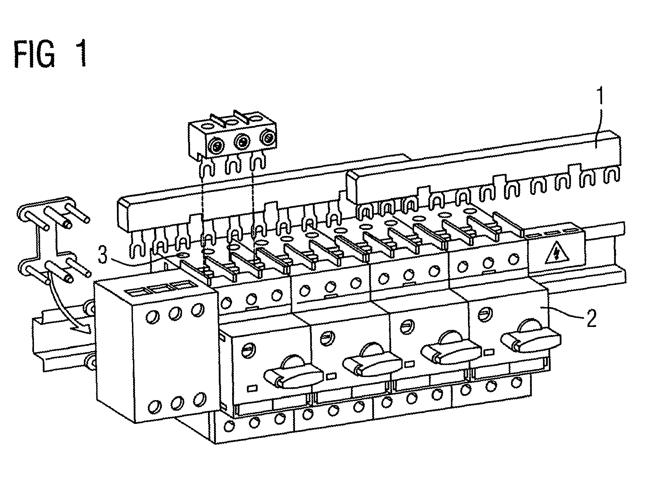

Um eine möglichst hohe Packungsdichte in den Schaltschränken zu erzielen, ist man andererseits bemüht, die Einspeisesysteme möglichst kompakt auszulegen und lange Verbindungswege zu vermeiden. Beispielsweise ist aus WO 0062386 A1 ein Einspeisesystem bekannt, bei dem die Stromschienen direkt auf den Leistungsschaltern montiert sind, so dass für die Einspeisung ein sehr geringer Verbindungsweg entsteht (s. Fig. 1). Die Ausblasöffnungen der Leistungsschalter sind in diesem System jedoch frei zugänglich und somit prinzipiell verbaubar.

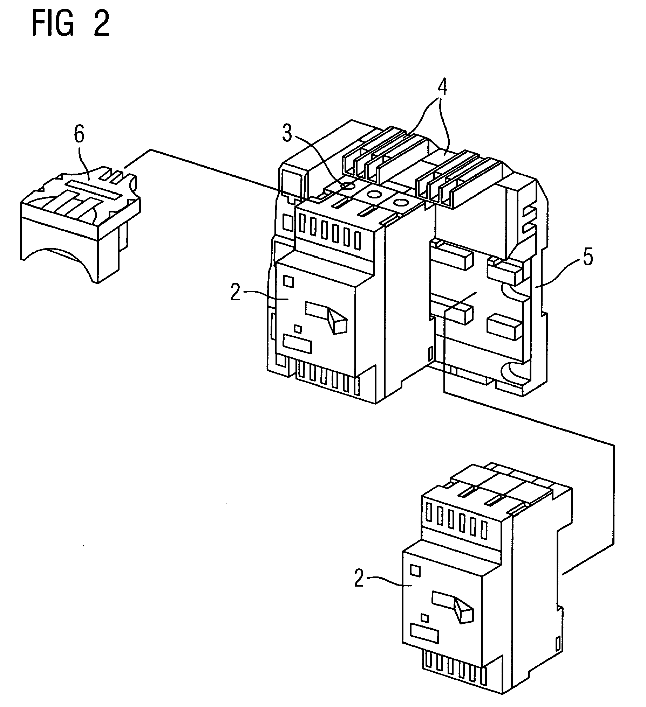

Fig. 2 zeigt ein so genanntes Cage Clamp Einspeisesystem. Dieses System ist aus dem Produktkatalog "Siemens CA 01 2003" bekannt und bietet unter anderem den Vorteil, dass ein Blockieren der Ausblasöffnungen durch den konstruktiven Aufbau des Systems verhindert wird. Das Einspeisesystem ermöglicht die Energieeinspeisung und -verteilung für eine Gruppe von mehreren Leistungsschaltern oder kompletten Verbraucherabzweigen mit Cage Clamp Anschlusstechnik. Die Basis des Systems besteht aus einem Grundmodul mit 3-Phasen-Sammelschienen, die mit dem Versorgungsnetz verbunden sind.

Die Sammelschienen sind unterhalb der montierten Leistungsschalter angeordnet. Um die Leistungsschalter eingangsseitig mit den Sammelschienen zu verbinden, sind Verbindungsstege vorgesehen, über die mittels eines Verbindungssteckers ein elektrischer Kontakt zwischen Sammelschienen und Leistungsschalter realisiert werden kann. Zwischen den Verbindungsstegen und der Oberseite der Leistungsschalter, auf der sich die Ausblasöffnungen befinden, existiert ein Freiraum, durch den ein ungehindertes Austreten des Plasmas beim Abschalten gewährleistet ist. Durch die gewählte Anordnung ist dieser Freiraum vor Verbauung weitgehend geschützt.

Der Erfindung liegt die Aufgabe zu Grunde, ein kompaktes und sicheres Einspeisesystem zur Verfügung zu stellen.

Diese Aufgabe wird durch ein Einspeisesystem für Niederspannungsschaltgeräte gelöst mit
- einer Montagevorrichtung zur Montage mindestens eines elektromechanischen Schaltgerätes in einer Montageebene, wobei das Schaltgerät Gehäuseöffnungen an mindestens einer ersten Seite des Schaltgerätes aufweist, und
- mindestens einer derart angeordneten Stromschiene, dass sich bei einem montierten Schaltgerät die Gehäuseöffnungen und erste Mittel zur Freihaltung der Gehäuseöffnungen in orthogonaler Richtung zur Montageebene im Wesentlichen zwischen der Stromschiene und der Montageebene befinden.

Die erfindungsgemäße Anordnung der Stromschiene(n) ermöglicht sehr kurze Verbindungswege zwischen den Stromschienen und den Einspeisekontakten der Schaltgeräte, da die Stromschienen in unmittelbarer Nähe dieser Kontakte montiert sind. Gleichzeitig schützen die Mittel zur Freihaltung der Gehäuseöffnungen vor einer Verbauung der Öffnungen. Weiterhin wird durch die besagten Mittel verhindert, dass Gegenstände gewollt oder ungewollt auf der ersten Seite der Schaltgeräte abgelegt werden und dadurch die Gehäuseöffnungen versperren.

Im Gegensatz zum Cage Clamp Einspeisesystem ist dieser für die Betriebssicherheit maßgebliche Vorteil nicht mit einer wesentlichen Vergrößerung der Bauhöhe des Einspeisesystems verbunden, da in dem erfindungsgemäßen System die zur Einspeisung in das Schaltgerät erforderliche Verbindung zwischen Schaltgerät und Sammelschiene nicht über die Seite des Schaltgerätes mit den Gehäuseöffnungen geführt wird.

Die Vorteile des erfindungsgemäßen Einspeisesystems kommen insbesondere bei einer Ausführungsform zum tragen, bei der die Montagevorrichtung zur Montage mindestens eines als elektromechanischer Leistungsschalter und/oder mindestens eines als kombiniertes Schaltgerät mit Leistungsschalterfunktionalität ausgeführten Schaltgerätes vorgesehen ist, wobei die Gehäuseöffnungen als Ausblasöffnungen zum Ausblasen eines bei einem Abschaltvorgang des Leistungsschalters bzw. des Kompaktabzweiges entstehenden Plasmas vorgesehen sind. Auf diese Weise wird durch die Mittel zur Freihaltung der Gehäuseöffnungen sichergestellt, dass das Plasma ungehindert aus den Ausblasöffnungen entweichen kann und so beispielsweise ein Phasenkurzschluss vermieden wird.

Die Vorteile einer Verwendung der Mittel zur Freihaltung der Gehäuseöffnungen kommen aber nicht nur bei Schaltgeräten mit der Funktionalität einer Kurzschlussstromunterbrechung zum tragen, wie den oben genannten Leistungsschaltern und den kombinierten Schaltgeräten mit Leistungsschalterfunktionalität. Auch bei einer Ausführungsform der Erfindung, bei der die Montagevorrichtung zur Montage eines als Sanftstarter ausgeführten Schaltgerätes vorgesehen ist, wobei die Gehäuseöffnungen als Durchlüftungsöffnungen zur Kühlung des Sanftstarters ausgeführt sind, erhöhen die Mittel zur Freihaltung der Gehäuseöffnungen die Betriebssicherheit. Bei einer Blockade der Durchlüftungsöffnungen wäre eine ausreichende Kühlung des Sanftstarters nicht mehr gewährleistet. Durch die Mittel zur Freihaltung der Durchlüftungsöffnungen kann diese Blockade vermieden werden.

Die Betriebssicherheit eines Einspeisesystems mit den erfindungsgemäßen Merkmalen kann weiter erhöht werden, indem das Einspeisesystem zweite Mittel zur Freihaltung weiterer Gehäuseöffnungen aufweist, wobei die weiteren Gehäuseöffnungen an einer zweiten, der ersten Seite des Schaltgerätes gegenüber liegenden Seite des Schaltgerätes angeordnet sind. Die weiteren Ausblasöffnungen sind in der Regel den abgangsseitigen Kontakten des Schaltgerätes zugeordnet. Durch die zweiten Mittel zur Freihaltung weiterer Gehäuseöffnungen des Schaltgerätes ist sichergestellt, dass auch die abgangsseitigen Gehäuseöffnungen nicht unzulässig verbaut werden können. Bei einem als Leistungsschalter verwendeten Schaltgerät kann somit das beim Abschalten eines Kurzschlussstromes zündende Plasma ungehindert entweichen.

Bei einem als Sanftstarter ausgeführten Schaltgerät dienen die weiteren Gehäuseöffnungen dazu, mit den an der ersten Seite des Schaltgerätes angebrachten Gehäuseöffnungen eine gute Durchlüftung des Sanftstarters zu gewährleisten.

Für die Mittel zur Freihaltung der Gehäuseöffnungen sind verschiedene Ausführungsformen denkbar. Beispielsweise können die ersten und/oder die zweiten Mittel zur Freihaltung der Gehäuseöffnungen einen die Gehäuseöffnungen umschließenden Rahmen aufweisen, der im Wesentlichen abstandsfrei auf der ersten und/oder der zweiten Seite des Schaltgerätes angeordnet ist.

Eine derartige Ausführungsform ist besonders vorteilhaft, wenn der Rahmen Trennwände aufweist, die derartig angeordnet sind, dass sie zusammen mit dem Rahmen und den Gehäuseöffnungen Kanäle bilden, wobei jeder Gehäuseöffnung ein Kanal zugeordnet ist. Die Trennwände erfüllen hierbei zwei Aufgaben. Zum einen bilden sie zusammen mit dem Rahmen eine gitterartige Struktur, die ein Blockieren der Gehäuseöffnungen durch Verbauung sowie durch Ablegen auch kleinerer Gegenstände weitgehend verhindert. Zum anderen trennen bei einem als Leistungsschalter ausgeführten Schaltgerät die Trennwände den Bereich direkt oberhalb der als Ausblasöffnungen dienenden Gehäuseöffnungen derartig voneinander ab, dass die bei einem Abschaltvorgang aus den einzelnen Ausblasöffnungen austretenden Plasmaströme voneinander getrennt sind. Somit werden ein Überschlag zwischen den Plasmaströmen und ein damit verbundener Phasenkurzschluss verhindert.

Für den Fall, dass Gegenstände auf dem mit Trennwänden bestückten Rahmen abgelegt werden, kann beim Leistungsschalter ein Entweichen des durch das Zünden des Lichtbogens entstehenden Gases zu mehreren Seiten hin weiter gewährleistet werden. Sinnvollerweise weisen die Trennwände und/oder der Rahmen hierzu Durchbrüche auf. Vorteilhafterweise werden diese Durchbrüche in einem unkritischen Bereich angebracht, d. h. oberhalb des Bereiches, indem der Lichtbogen brennt. Dadurch wird ein Phasenkurzschluss durch die Durchbrüche hindurch vermieden. Trotzdem kann das Gas zu den Durchbrüchen hin entweichen, falls der mit den Trennwänden bestückte Rahmen lokal abgedeckt sein sollte.

Alternativ können auch Aussparungen in den Trennwänden vorgesehen werden, die an dem der ersten Seite des Schaltgerätes abgewandten Rand jeder Trennwand und/oder an dem der ersten Seite des Schaltgerätes abgewandten Rand des Rahmens vorgesehen werden. Die Aussparungen erfüllen den gleichen Zweck wie die Durchbrüche. Durch die hier definierte Position der Aussparungen ist der durch die Aussparungen erzeugte Verbindungskanal zwischen den Trennwänden auch hier in einem unkritischen Bereich angeordnet.

Um eine Blockieren der Ausblasöffnungen auch durch kleinere Gegenstände zu vermeiden, ist es sinnvoll, dass die ersten und/oder die zweiten Mittel zur Freihaltung der Gehäuseöffnungen eine feinmaschig Struktur zur Abdeckung der Gehäuseöffnungen auf der den Gehäuseöffnungen abgewandten Seite der ersten und/oder zweiten Mittel zur Freihaltung der Gehäuseöffnungen aufweisen. Wird z. B. als erste und/oder zweite Mittel zur Freihaltung der Gehäuseöffnungen der mit Trennwänden bestückte Rahmen verwendet, so kann dieser noch mit einem Gitter oder einer Lamellenstruktur abgedeckt werden. Auf diese Weise wird vermieden, dass sehr kleine Teile, die in die durch die Trennwände gebildeten Kanäle fallen könnten, die Gehäuseöffnungen blockieren.

Eine konstruktiv sehr einfache Ausführungsform der ersten und/oder zweiten Mittel zur Verbauung der Ausblasöffnungen lässt sich erzielen, indem die ersten und/oder zweiten Mittel zur Freihaltung der Gehäuseöffnungen mindestens zwei Bolzen aufweisen.

Im einfachsten Fall bestehen die ersten und/oder zweiten Mittel ausschließlich aus diesen beiden Bolzen. Diese begrenzen die auf einer Seite des oder der Schaltgeräte angeordneten Gehäuseöffnungen und verhindern deren Verbauung. Idealerweise kann auf der den Gehäuseöffnungen abgewandten Seite der Bolzen eine feinmaschige Struktur z. B. in Form eines Gitters vorgesehen werden, durch die ein Blockieren der Gehäuseöffnungen auch durch kleinere Gegenstände verhindert wird.

In einer vorteilhaften Ausführungsform der Erfindung sind die ersten Mittel zur Freihaltung der Gehäuseöffnungen einstückig mit einer Halterung für die Stromschiene ausgeführt. Denkbar ist hier beispielsweise eine Rahmenstruktur, wobei der Rahmen eine Halteklammervorrichtung zur Aufnahme isolierter Sammelschienen aufweist. Alternativ kann der Rahmen auch einstückig mit einem Sammelschienenkasten gefertigt sein, indem die Sammelschiene(n) untergebracht sind.

Im Folgenden wird die Erfindung anhand der in den Figuren dargestellten Ausführungsbeispiele näher beschrieben und erläutert. Es zeigen:
- FIG 1: Eine Anordnung von als Leistungsschalter ausgeführten Schaltgeräten und einem Sammelschienensystem,
- FIG 2: ein Cage Clamp Einspeisesystem,
- FIG 3: ein Einspeisesystem mit einem als Rahmen mit Trennwänden ausgeführten Mittel zur Freihaltung von Gehäuseöffnungen,
- FIG 4: ein Einspeisessystem mit einem aus zwei Bolzen und einem Gitter bestehenden Mittel zur Freihaltung von Gehäuseöffnungen und
- FIG 5: ein Einspeissystem, bei dem ein als Rahmen mit Trennwänden ausgeführtes Mittel zur Freihaltung von Gehäuseöffnungen einstückig mit einem Sammelschienenkasten ausgeführt ist.

FIG 1 zeigt eine Anordnung von als Leistungsschalter ausgeführten Schaltgeräten 2 und einem Sammelschienensystem. Bei diesem aus dem Stand der Technik bekannten System sind die Sammelschienen 1 vor den als Ausblasöffnungen vorgesehenen Gehäuseöffnungen 3 der Leistungsschalter 2 angebracht, so dass die Ausblasöffnungen 3 frei liegen und die Verbindungswege zwischen den Einspeisekontakten der Leistungsschalter 2 und den Sammelschienen 1 minimal sind. Bei einer derartigen Anordnung der Sammelschienen 1 wird eine sehr geringe Bauhöhe erreicht. Daher kann bei einer Montage in einem Schaltschrank eine sehr hohe Packungsdichte erzielt werden.

Nachteilhaft an der in FIG 1 gezeigten Anordnung ist die Tatsache, dass die Ausblasöffnungen 3 in keiner Weise gegen eine unzulässige Verbauung geschützt sind. Darüber hinaus kann bei dieser Anordnung nicht ausgeschlossen werden, dass die Ausblasöffnungen 3 durch gewollt oder ungewollt abgelegte Gegenstände blockiert werden. Werden die Ausblasöffnungen 3 blockiert, können durch das beim Abschaltvorgang zündende Plasma Phasenkurzschlüsse im Bereich der Anschlussklemmen am Leistungsschalter 2 und/oder an benachbarten Geräten entstehen.

FIG 2 zeigt ein Cage Clamp Einspeisesystem, bei dem oben genannter Nachteil der möglichen Verbauung der Ausblasöffnungen 3 durch eine entsprechende konstruktive Ausführung vermieden wird. Beim Cage Clamp Einspeisesystem befinden sich die Sammelschienen hinter den Leistungsschaltern 2. Zur Einspeisung werden die Sammelschienenpotenziale über die Montagefläche 5 und Verbindungsstege 4 oberhalb der Seite des Leistungsschalters 2 mit den Ausblasöffnungen 3 abgreifbar gemacht. Der Kontakt zwischen den Verbindungsstegen 4 und den Einspeisekontakten des Leistungsschalters 2 wird schließlich über einen Verbindungsstecker 6 realisiert.

Zwischen der Seite des Leistungsschalters 2 mit den Ausblasöffnungen 3 und den Verbindungsstegen 4 bzw. Verbindungssteckern 6 ist ein genügend großer Abstand vorgesehen, der ein ungehindertes Ausblasen des Plasmas gewährleistet. Durch die konstruktive Maßnahme wird jedoch die Bauhöhe des Einspeisesystems erheblich vergrößert.

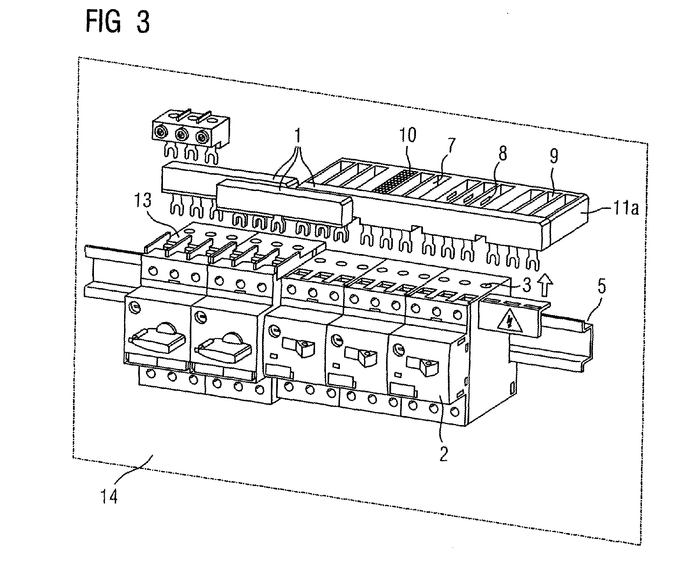

FIG 3 zeigt ein Einspeisesystem mit einem als Rahmen 11a mit Trennwänden 7 ausgeführten Mittel zur Freihaltung von Gehäuseöffnungen 3. Als Leistungsschalter ausgeführte Schaltgeräte 2 sind mit einer als Hutschiene ausgeführten Montagevorrichtung 5 in einer Montageebene 14 befestigt. Bei der hier dargestellten erfindungsgemäßen Ausführungsform befinden sich die Stromschienen 1 in unmittelbarer Nähe der Einspeisekontakte der Leistungsschalter 2, so dass lange Verbindungswege vermieden werden und eine kompakte Baugröße des gesamten Einspeisesystems gewährleistet ist. Gleichzeitig sind auch die als Ausblasöffnungen vorgesehenen Gehäuseöffnungen 3 durch den Rahmen 11a und seinen Trennwänden 7 vor Blockieren geschützt. Durch den Rahmen 11a und die Trennwänden 7 werden für jede Ausblasöffnung 3 Kanäle 9 in Richtung der Ausblasöffnungen 3 gebildet. Die Trennwände 7 trennen somit die beim Abschalten entstehenden Plasmaströme voneinander, so dass ein Phasenkurzschluss über das ausgeblasene Plasma verhindert wird.

Weiterhin sind in den Trennwänden 7 Durchbrüche 8 quer zur Ausblasrichtung des Plasmas vorgesehen. Die Durchbrüche 8 sind soweit von den Ausblasöffnungen 3 entfernt angeordnet, dass ein Phasenkurzschluss durch die Durchbrüche 8 hindurch ausgeschlossen ist. Andererseits bewirken die Durchbrüche 8, dass bei einer Blockierung einzelner Kanäle 9 das beim Zünden des Lichtbogens entstehende Gas immer noch durch die Durchbrüche 8 in benachbarte Kanäle 9 und von dort nach oben entweichen kann, so dass ein Überdruck und ein damit verbundenes Zurückdrängen des Lichtbogens in das Gerät vermieden wird. Eine ähnliche Funktionalität lässt sich erreichen, wenn anstelle der Durchbrüche Aussparungen an dem den Leistungsschaltern abgewandten Rand der Trennwände und des Rahmens vorgesehen sind.

Die Schutzfunktion des Rahmens 11a zusammen mit den Trennwänden 7 vor einem Blockieren der Ausblasöffnungen 3 wird noch weiter verbessert, indem die einzelnen Kanäle 9 durch als Gitter ausgeführte feinmaschige Strukturen 10 abgedeckt werden. Die Gitter 10 verhindern ein Blockieren der Ausblasöffnungen 3 auch durch kleinere Teile.

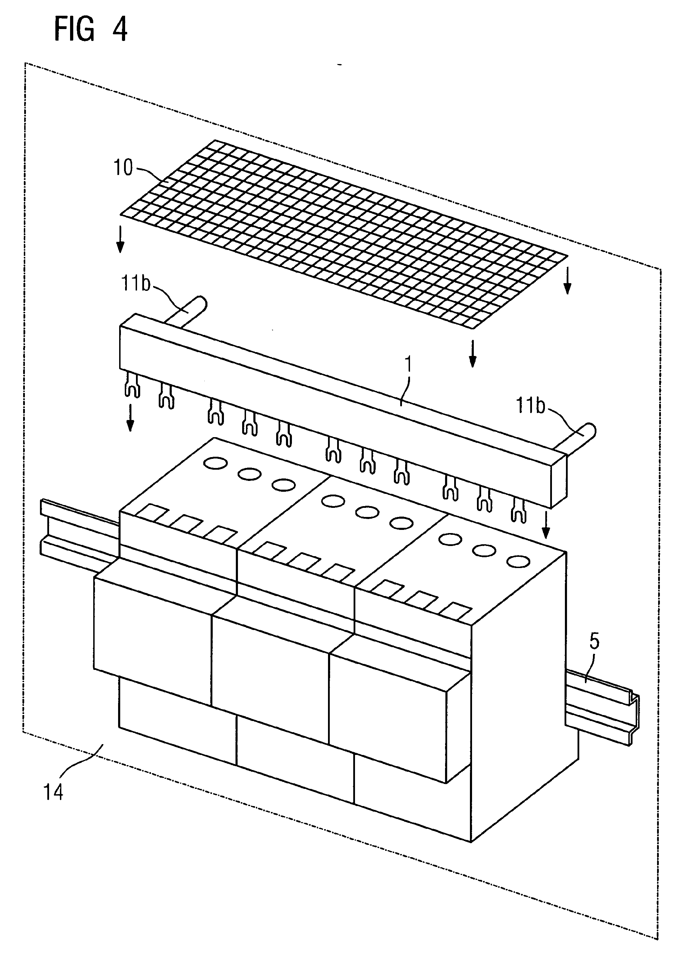

FIG 4 zeigt eine konstruktiv besonders einfach zu realisierende Ausführungsform der Erfindung, bei der ein Einspeisesystem mit einem aus zwei Bolzen 11b und einem Gitter 10 bestehenden Mittel zur Freihaltung von Gehäuseöffnungen ausgeführt ist. Über die Bolzen 11b wird eine mechanische Verbindung zwischen der Stromschiene 1 und der Montageebene 14 hergestellt. Das Gitter 10 kann zum Beispiel einfach auf die Bolzen 11b aufgelegt werden oder mit der Stromschiene 1 oder der Montageebene 14 verbunden werden. Durch die Bolzen 11b ist ein ausreichender Sicherheitsabstand des Gitters 10 zu den Gehäuseöffnungen 3 gegeben.

In dieser Ausführungsform ist hingegen für den Fall, dass das Schaltgerät als Leistungsschalter ausgeführt ist, keine zusätzliche Abtrennung der Plasmaströme vorgesehen.

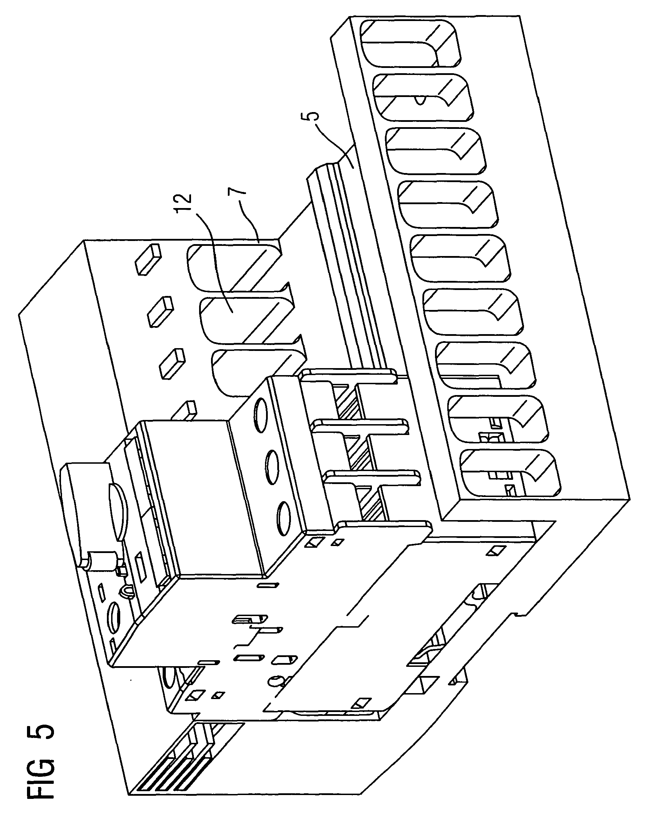

FIG 5 zeigt ein Einspeissystem, bei dem ein als Rahmen mit Trennwänden 7 ausgeführtes Mittel zur Freihaltung von Gehäuseöffnungen einstückig mit einem Sammelschienenkasten 12 ausgeführt ist. In der dargestellten Ausführungsform ist zusätzlich auch noch die Montagevorrichtung 5 einstückig mit dem Verbund aus Schienenkasten 12 und Rahmen sowie dessen Trennwände 7 ausgeführt. Dieses als unteilbare mechanische Einheit gefertigte Einspeisesystem gewährt ein Maximum an Sicherheit gegenüber unzulässiger Verbauung. Die im Sammelschienenkasten 12 angeordneten Sammelschienen befinden sich in unmittelbarer Nähe zu den Einspeisekontakten des Schaltgerätes, wodurch eine kompakte Bauform des Einspeisesystems erreicht wird.

Die vorliegende Erfindung soll nicht auf die hier exemplarisch gezeigten Ausführungsformen beschränkt sein. Vielmehr sind weitere Ausführungsformen denkbar und von der Erfindung umfasst, solange der Grundgedanke, dass auf der ersten Seite des Schaltgerätes 2 erste Mittel zur Freihaltung der Gehäuseöffnungen 11a,11b zwischen der Stromschiene 1 und der Montageebene 14 angeordnet sind, erfüllt ist. Anstelle des in Fig 4 gezeigten Gitters 10 kann auch eine geschlossen Fläche vorgesehen werden, solange diese in einem ausreichend großen Abstand zu den Gehäuseöffnungen angeordnet ist. Anstelle der Bolzen 11b ist auch eine Steckverbindung denkbar, die eine Montage des Gitters 10 mit der Montagevorrichtung 5 erlaubt. Die entsprechend Mittel zur Erzeugung einer solchen Steckverbindung können auch analog zu der in FIG 5 gezeigten Ausführungsform einstückig mit der Montagevorrichtung 5 ausgeführt sein. Auch ist eine einstückige Ausführung der Montagevorrichtung und dem Rahmen zur Freihaltung der Gehäuseöffnungen denkbar, wobei eine Sammelschienenkasten z. B. über eine Steckverbindung mit dem Rahmen befestigt wird.

Die in FIG 4 gezeigte Ausführungsform lässt sich ebenfalls mit einer Struktur aus Trennwänden kombinieren, die in die aus den Bolzen 11b und der Sammelschiene 1 gebildete Struktur eingelassen wird und somit auch für eine Trennung der Plasmaströme sorgt. Eine solche Ausführungsform kann sowohl mit als auch ohne das zur Abdeckung vorgesehene Gitter 10 ausgeführt sein. Die dargestellten Mittel zur Freihaltung der Gehäuseöffnungen 3 können darüber hinaus auch auf beiden Seiten des Leistungsschalters 2 vorgesehen werden, um sowohl eingangs- als auch abgangsseitig die Gehäuseöffnungen vor Verbauung zu schützen. Das Einspeisesystem ist nicht ausschließlich zur Einspeisung in Leistungsschalter vorgesehen. Vielmehr können sich auf der Montagefläche insbesondere auch zwischen den Leitungsschaltern diverse andere Schaltgeräte oder Abzweige befinden wie z. B. Sanftstarter für Motoren, Schütze zum Zu- und Abschalten von Motoren, Überlastrelais oder sicherungslose Verbraucherabzweige.

## Patentansprüche

1. Einspeisesystem für Niederspannungsschaltgeräte mit
- einer Montagevorrichtung (5) zur Montage mindestens eines elektromechanischen Schaltgerätes (2) in einer Montageebene (14), wobei das Schaltgerät (2) Gehäuseöffnungen (3) an mindestens einer ersten Seite (13) des Schaltgerätes (2) aufweist, und
- mindestens einer derart angeordneten Stromschiene (1), dass sich bei einem montierten Schaltgerät die Gehäuseöffnungen (3) und erste Mittel (10,11a,11b,12) zur Freihaltung der Gehäuseöffnungen (3) in orthogonaler Richtung zur Montageebene (14) im Wesentlichen zwischen der Stromschiene (1) und der Montageebene (14) befinden.

2. Einspeisesystem nach Anspruch 1,
**dadurch gekennzeichnet , dass** die Montagevorrichtung (5) zur Montage mindestens eines als elektromechanischer Leistungsschalter und/oder mindestens eines als kombiniertes Schaltgerät mit Leistungsschalterfunktionalität ausgeführten Schaltgerätes (2) vorgesehen ist, wobei die Gehäuseöffnungen (3) als Ausblasöffnungen zum Ausblasen eines bei einem Abschaltvorgang des Leistungsschalters bzw. des Kompaktabzweiges entstehenden Plasmas vorgesehen sind.

3. Einspeisesystem nach einem der Ansprüche 1 oder 2,
**dadurch gekennzeichnet , dass** die Montagevorrichtung (5) zur Montage eines als Sanftstarter ausgeführten Schaltgerätes (2) vorgesehen ist, wobei die Gehäuseöffnungen (3) als Durchlüftungsöffnungen zur Kühlung des Sanftstarters ausgeführt sind.

4. Einspeisesystem nach einem der Ansprüche 1 bis 3,
**dadurch gekennzeichnet , dass** das Einspeisesystem zweite Mittel zur Freihaltung weiterer Gehäuseöffnungen aufweist, wobei die weiteren Gehäuseöffnungen an einer zweiten, der ersten Seite (13) des Schaltgerätes (2) gegenüber liegenden Seite des Schaltgerätes (2) angeordnet sind.

5. Einspeisesystem nach einem der Ansprüche 1 und 4,
**dadurch gekennzeichnet , dass** die ersten und/oder die zweiten Mittel zur Freihaltung der Gehäuseöffnungen (3) einen die Gehäuseöffnungen umschließenden Rahmen (11a) aufweisen, der im Wesentlichen abstandsfrei auf der ersten und/oder der zweiten Seite des Schaltgerätes (2) angeordnet ist.

6. Einspeisesystem nach einem der Ansprüche 1 bis 5,
**dadurch gekennzeichnet , dass** der Rahmen (11a) Trennwände (7) aufweist, die derartig angeordnet sind, dass sie zusammen mit dem Rahmen (11a) und den Gehäuseöffnungen (3) Kanäle (9) bilden, wobei jeder Gehäuseöffnung (3) ein Kanal (9) zugeordnet ist.

7. Einspeisesystem nach einem der Ansprüche 1 bis 6,
**dadurch gekennzeichnet , dass** die Trennwände (7) und/oder der Rahmen (11a) Durchbrüche (8) aufweisen.

8. Einspeisesystem nach einem der Ansprüche 1 bis 7,
**dadurch gekennzeichnet , dass** die ersten und/oder die zweiten Mittel zur Freihaltung der Gehäuseöffnungen eine feinmaschige Struktur (10) zur Abdeckung der Gehäuseöffnungen (3) auf der den Gehäuseöffnungen (3) abgewandten Seite der ersten und/oder zweiten Mittel zur Freihaltung der Gehäuseöffnungen (3) aufweisen.

9. Einspeisesystem nach einem der Ansprüche 1 bis 8,
**dadurch gekennzeichnet , dass** die ersten und/oder die zweiten Mittel zur Freihaltung der Gehäuseöffnungen (3) mindestens zwei Bolzen (11b) aufweisen.

10. Einspeisesystem nach einem der Ansprüche 1 bis 9,
**dadurch gekennzeichnet , dass** die ersten Mittel zur Freihaltung der Gehäuseöffnungen (3) einstückig mit einer Halterung für die Stromschiene (1) ausgeführt sind.
